(19) Europäisches Patentamt
European Patent Office
Office européen des brevets

(11) **EP 2 354 812 A2**

## (12) EUROPEAN PATENT APPLICATION

(43) Date of publication:
**10.08.2011 Bulletin 2011/32**

(51) Int Cl.:
***G01T 3/08*** *(2006.01)*

(21) Application number: **11151919.5**

(22) Date of filing: **24.01.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **03.02.2010 US 699704**

(71) Applicant: **Honeywell International Inc.**
**Morristown, NJ 07962 (US)**

(72) Inventors:
• **Randazzo, Todd Andrew**
  **Morristown, NJ 07962-2245 (US)**
• **Larsen, Bradley J.**
  **Morristown, NJ 07962-2245 (US)**
• **Fechner, Paul S.**
  **Morristown, NJ 07962-2245 (US)**

(74) Representative: **Buckley, Guy Julian**
  **Patent Outsourcing Limited**
  **1 King Street**
  **Bakewell**
  **Derbyshire DE45 1DZ (GB)**

(54) **Neutron sensor with thin interconnect stack**

(57)    A semiconductor device comprises a substrate, an active semiconductor layer situated on the substrate, a stack of interconnect layers deposited on the active semiconductor layer, and a neutron conversion layer deposited on the stack of interconnect layers, wherein the stack of interconnect layers is configured such that at least about 10% of secondary charged particles generated in the neutron conversion layer will have a sufficient ion track length in the active semiconductor layer to generate a detectable charge in the active semiconductor layer. Another semiconductor device comprises a substrate, an active semiconductor layer situated on the substrate, a neutron conversion layer deposited on the active semiconductor layer, and a stack of interconnect layers deposited on the neutron conversion layer.

FIG. 1

**Description**

**TECHNICAL FIELD**

The disclosure is generally directed to semiconductor devices.

**BACKGROUND**

Neutron particle detection is a method for fissile nuclear material detection. Because neutrons have no electrical charge, their detection generally relies on their participation in nuclear reactions. Some neutron detectors use gas-filled tubes containing neutron-sensitive material, such as either $^3$He or $BF_3$ gas, which reacts with neutrons to form secondary charged particles that can subsequently be detected through ionization. Such gas-filled proportional neutron detectors are typically relatively expensive, relatively bulky, not mechanically rugged, and require a large amount of power.

**SUMMARY**

In general, the disclosure is directed to a semiconductor device that can be used as a neutron detector. The semiconductor detector (also referred to as a neutron detector) includes an active semiconductor layer situated (e.g., fabricated) on a substrate, a thin stack of interconnect layers deposited on the active semiconductor layer, and a neutron conversion layer deposited on the interconnect stack. In addition, the disclosure is directed toward a method of making the semiconductor device.

In one aspect, the disclosure is directed to a method comprising fabricating an active semiconductor layer on a substrate, depositing a stack of interconnect layers on the active semiconductor layer, and depositing a neutron conversion layer on the stack of interconnect layers, wherein the stack of interconnect layers is configured such that at least about 10% of secondary charged particles generated in the neutron conversion layer will have a sufficient ion track length in the active semiconductor layer to generate a detectable charge.

In another aspect, the disclosure is directed to a semiconductor device comprising a substrate, an active semiconductor layer situated on the substrate, a stack of interconnect layers deposited on the active semiconductor layer, and a neutron conversion layer deposited on the stack of interconnect layers, wherein the stack of interconnect layers is configured such that at least about 10% of secondary charged particles generated in the neutron conversion layer will have a sufficient ion track length in the active semiconductor layer to generate a detectable charge.

In another aspect, the disclosure is directed to a semiconductor device comprising a substrate, an active semiconductor layer situated on the substrate, a neutron conversion layer deposited on the active semiconductor layer, and a stack of interconnect layers deposited on the neutron conversion layer. In some examples, the substrate can comprise a bulk semiconductor substrate or a silicon-on-insulator (SOI)-type substrate.

The details of one or more embodiments of the disclosure are set forth in the accompanying drawings and the description below. Other features, objects, and advantages of the disclosure will be apparent from the description and drawings, and from the claims.

**BRIEF DESCRIPTION OF DRAWINGS**

FIG. 1 is a schematic side-view diagram of an example neutron detector on a bulk semiconductor substrate.
FIG. 2 is a schematic side-view diagram of another example neutron detector on a bulk semiconductor substrate.
FIG. 3 is a schematic side-view diagram of the neutron detector showing a nuclear reaction in a neutron conversion layer and the resulting secondary charged particle detected in an active semiconductor layer.
FIG. 4 is a schematic side-view diagram of an example neutron detector on an insulator substrate.
FIG. 5 is a schematic side-view diagram of an example neutron detector with a neutron conversion layer deposited under an interconnect stack and in close proximity to an active semiconductor layer.
FIG. 6 is a flow diagram of an example method of making the example neutron detectors shown in FIGS. 1-4.
FIG. 7 is a flow diagram of an example method of making the example neutron detector shown in FIG. 5.

**DETAILED DESCRIPTION**

In general, this disclosure is directed to a semiconductor device that may be used as a solid-state neutron detector. The solid-state neutron detector provides an indication of the presence of neutrons through the use of an active semiconductor layer that detects the present of ionizing radiation, such as the secondary charged particles produced through neutron nuclear reactions. The solid-state neutron detector uses a solid film of neutron conversion material, such as boron-10, that forms secondary charged particles, such as alpha particles, when a neutron encounters the neutron conversion material. In examples described herein, the neutron conversion material is placed in close proximity to a semiconductor device layer containing an array of charge-sensitive circuits (e.g., one or more memory circuit arrays) that is sensitive to the secondary charged particles, and detection of changes in the semiconductor device layer indicate the presence of neutrons. The secondary charged particles can cause electrical effects in electrical elements that are present in the semiconductor device layer. Solid-state neutron detectors can take advantage of the featured size, cost, voltage, and power scaling of mass manufactured silicon microelectronics, and, therefore, may be less expensive compared to neutron detectors that use gas-filled tubes containing neutron-sensitive material.

In neutron detectors described herein, a neutron conversion film is located close enough to the semiconductor device layer so that a sufficient number of secondary charge particles reach the semiconductor device layer to generate a detectable change. In some examples, the neutron detector includes a neutron conversion layer on top of a thin interconnect stack, and, as a result, the neutron conversion layer is in close proximity to an active semiconductor layer, allowing for a substantial fraction of the secondary charged particles generated in the neutron conversion layer to have a sufficient ion track in the active semiconductor layer. In this way, the neutron detector provides for detection of secondary charged particles produced by the reaction of neutrons with the neutron conversion layer.

The neutron detector described herein includes a neutron conversion layer that is deposited on top of the active semiconductor layer (i.e., on the side opposite the substrate). Because of this relative arrangement between the neutron conversion layer and the active semiconductor layer, the method of making the neutron detector allows the neutron conversion layer to be added to a semiconductor device without requiring any modification to the method of making the underlying substrate, active semiconductor layer, or interconnect stack. As a result, the neutron detector can be incorporated into a semiconductor device (e.g., a memory device) relatively easily. For example, semiconductor foundries can use stock manufacturing techniques at the die and assembly level so that the neutron conversion layer can be deposited at the wafer level, providing a much cheaper and more reliable manufacturing process compared to prior neutron detectors having neutron conversion material on the back side of a substrate, usually a silicon-on-insulator (SOI) insulation layer, which requires significant and expensive process developments and changes at either the die level or assembly level, or both.

In some examples, the neutron detector of the present disclosure can also be placed on a bulk semiconductor material, such as bulk silicon, which can result in a thicker active semiconductor layer and longer charged-particle track lengths, which can provide a higher likelihood for secondary charged particle detection. A bulk semiconductor substrate also generally provides a larger sensitive cross-sectional area for the secondary charged particles, which can make it more likely that a particular secondary charged particle will encounter a portion of active semiconductor layer that is capable of detecting the secondary charged particle. In some examples, the neutron detector of the present disclosure also allows for wire bond connection with the active semiconductor layer.

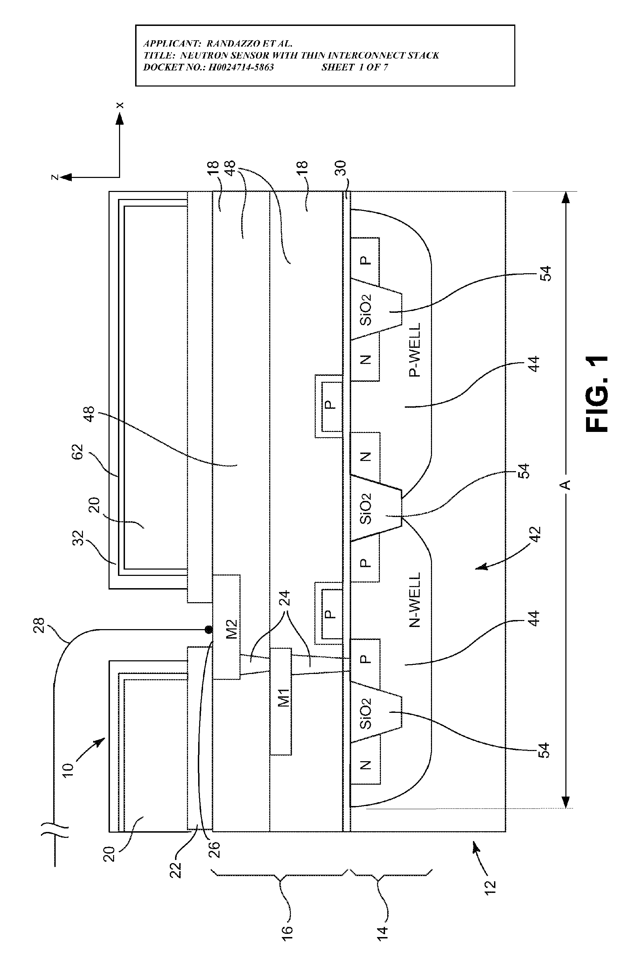

FIG. 1 illustrates an example semiconductor device 10, which can be a neutron detector. Semiconductor device 10, also referred to as neutron detector 10, includes a substrate 12, an active semiconductor layer 14 fabricated on substrate 12, a stack 16 of interconnect layers 18 (also referred to as an interconnect stack 16) deposited on active semiconductor layer 14, and a neutron conversion layer 20 deposited on interconnect stack 16. In one example, interconnect stack 16 is sufficiently thin such that at least 10% of secondary charged particles generated in neutron conversion layer 20 have a sufficient ion track length in active semiconductor layer 14 to generate a detectable charge. In another example, interconnect stack 16 is sufficiently thin such that at least 20% of secondary charged particles generated in neutron conversion layer 20 have a sufficient ion track length in active semiconductor layer 14 to generate a detectable charge. In one example, interconnect stack 16 has a thickness between about 0.5 microns and about 3 microns, for example between about 0.8 microns and about 1.5 microns, such as about 1.2 microns.

In the example shown in FIG. 1, neutron detector 10 further includes a barrier layer 22 deposited between interconnect stack 16 and neutron conversion layer 20. Barrier layer 22 can help electrically isolate the neutron conversion material (which may be conductive) from interconnect stack 16. Barrier layer 22 may also help promote adhesion between neutron conversion layer 20 and interconnect stack 16 and may help prevent contamination of interconnect stack 16 from the neutron conversion material. Interconnect stack 16 may also include interconnecting wires, represented schematically by "M1" for a first interconnect layer and "M2" for a second interconnect layer in FIG. 1, electrically conductive contacts and vias 24, and electrically conductive bondsite location 26 for electrically connecting active semiconductor layer 14 to another circuit that is external to neutron detector 10, such as a printed circuit board (not shown). In one example, neutron detector 10 is electrically connected to the other circuit with a wire 28 that is bonded to a bondsite location 26, which is electrically connected to interconnect wiring M2, e.g., through a process generally referred to as wire bonding. Finally, neutron detector 10 may include an isolation layer 30, such as a dielectric layer made from, for example, silicon dioxide, deposited between active semiconductor layer 14 and interconnect stack 16, and a passivation layer 32, such as a silicon nitride layer, deposited on neutron conversion layer 20.

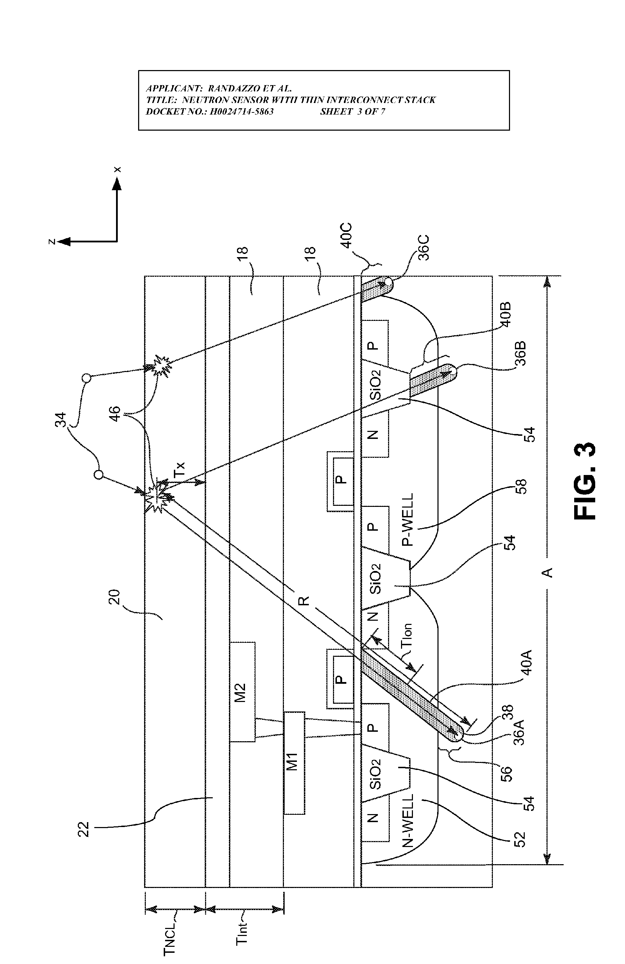

As shown in FIG. 3, which is a conceptual illustration of a neutron interacting with neutron detector 10, neutron detection by neutron detector 10 occurs through the use of a neutron conversion layer 20 comprising a neutron conversion material that reacts with neutrons 34 to emit secondary charged particles 36A, 36B, 36C (collectively referred to as "secondary charged particles 36"), as shown in FIG. 3. The secondary charged particles 36 pass through neutron conversion layer 20 and interconnect stack 16 to penetrate into active semiconductor layer 14 where the secondary charged particles 36 create a charge cloud 38 that can be detected by active semiconductor layer 14. Neutron conversion layer 20 is deposited on the "front side" of neutron detector 10, wherein "front side" denotes the side of active semiconductor layer 14 that is opposite from substrate 12. This front side deposition of neutron conversion layer 20 allows for a method of manufacture where substrate 12, active semiconductor layer 14, and interconnect stack 16 can be deposited using standard semiconductor manufacturing techniques so that no modifications are needed to the underlying device manufacturing process. Advantageously, this allows neutron detector 10 to be manufactured without having to undergo expensive modifications at the foundry die and assembly level, but rather only requires a simple modification at the wafer level of adding neutron conversion layer 20, barrier layer 22 (if needed), an adhesion layer (if needed) to allow neutron conversion layer 20 to adhere to interconnect stack 16 or barrier layer 22, and passivation layer 32 by a common deposition method.

In one example, neutron conversion layer 20 comprises a pure boron-10 film deposited by magnetron sputtering and standard chemical vapor deposition techniques. A boron-10 film can be patterned and etched by standard methods in order to form bondsite locations and vias within neutron conversion layer 20. The boron-10 reacts with a neutron 34 to emit an alpha particle and a lithium-7 ion ($^7$Li). The alpha particle and lithium-7 ion are both examples of a secondary charged particle 36 that is capable of forming a charge cloud 38 in active semiconductor layer 14. Other materials that may be used in neutron conversion layer 20 include compositions enriched with boron-10, such as a layer doped with boron-10 or a borophosphosilicate glass (BPSG) comprising boron-10.

Secondary charged particles 36 emitted by neutron conversion layer 20 may be, for example, alpha particles, or lithium-7 ions. Neutron detector 10 may also include a barrier layer 22 deposited between interconnect stack 16 and neutron conversion layer 20 to electrically isolate neutron conversion layer 20 from interconnect stack 16, as well as to promote adhesion and prevent contamination. Examples of materials that may be used as barrier layer 22 include silicon nitride or an oxynitride stack. An adhesion layer (not shown) may also be provided to adhere neutron conversion layer 20 to interconnect stack 16 or barrier layer 22.

Neutron detector 10 detects neutrons by converting the electrically neutral neutron 34 to secondary charged particles 36 as the neutron 34 passes through neutron conversion layer 20, wherein some of the secondary charged particles 36 are emitted through interconnect stack 16 and into active semiconductor layer 14. The secondary charged particles can be detected within active semiconductor layer 14, such as with an array 42 of charge-sensitive circuits 44, such as those in a SRAM device that is susceptible to single-event upsets (SEUs), within active semiconductor layer 14, as shown in FIG. 3. Secondary charged particles 36 that are emitted generally in the direction of active semiconductor layer 14 must pass through a portion of neutron conversion layer 20, barrier layer 22 (if present), and interconnect stack 16 before secondary charged particles 36 reach active semiconductor layer 14. A secondary charged particle 36 that is emitted into active semiconductor layer 14 creates a charge cloud 38 along a track 40 that the secondary charged particle 36 travels within active semiconductor layer 14, also referred to as an ion track 40.

Charge-sensitive array 42 detects the presence of secondary charged particles 36 if ion track 40 of the secondary charged particle 36 has at least a minimum track length $T_{Ion}$ that produces sufficient charge to be detected by charge-sensitive array 42 (hereinafter referred to as a "detectable charge"). This minimum ion track length $T_{Ion}$ will depend on the sensitivity of the particular circuits 44 in charge-sensitive array 42 (shown in FIG. 1). In one example, charge-sensitive array 42 has a sensitivity such that the minimum track length $T_{Ion}$ in active semiconductor layer 14 that will create a detectable charge is between about 0.2 micron and about 0.9 micron, such as between about 0.4 micron and about 0.6 micron or about 0.5 micron.

Each of the secondary charged particles 36 emitted from neutron conversion layer 20 has a limited amount of energy, and, thus, has a limited penetration range R through device 10. The actual penetration range R of a secondary charged particle 36 emitted from neutron conversion layer 20 depends on the reaction that generates the secondary charged particle 36 and the materials through which the secondary charged particle 36 passes. For example, an alpha particle emitted from a reaction between a neutron and boron-10 and that is emitted through silicon dioxide (which can be used as a dielectric material in interconnect layers 18) and silicon (which can be used as a semiconductor material in active semiconductor layer 14) has been shown to have a penetration range of about 3.5 microns. Because of this limited penetration range R, positioning neutron conversion layer 20 close to active semiconductor layer 14 can help improve the detection of neutrons 34 by neutron detector 10. The distance between neutron conversion layer 20 and active semiconductor layer 14 can be selected based on the thickness of interconnect stack 16 and barrier layer 22 (if present), whereby the thickness is denoted as $T_{Int}$ in FIG. 3.

The fraction of generated secondary charged particles 36 that will reach active silicon layer 14 and penetrate into active semiconductor layer 14 with at least the desired minimum ion track length $T_{Ion}$ sufficient to generate a detectable charge can be estimated. Equation 1 below provides one formula for estimating the fraction of generated secondary charged particles 36 that reach active silicon layer 14 from the reactions of neutrons at a particular point within neutron conversion layer 20. Equation 1 assumes that secondary charged particles 36 are emitted uniformly from a point of reaction 46 within neutron conversion layer 20. In addition, the formula assumes that only the half of generated secondary charged particles 36 that are emitted in the general direction of active semiconductor layer 14 reach active silicon layer 14. While the second assumption eliminates 50% of the generated secondary charged particles 36 from consideration, it is believed that the secondary charged particles 36 emitted in the direction away from active semiconductor layer 14 will fail to be captured by active semiconductor layer 14 regardless of how close neutron conversion layer 20 is from active semiconductor layer 14.

For a neutron conversion reaction that occurs at reaction point 46 at a depth $T_x$ from the bottom of neutron conversion layer 20 (i.e., the "bottom" referring to a surface of neutron conversion layer 20 closest to substrate 12), the fraction $F_{TX}$ of secondary charged particles 36 that will have sufficient energy to penetrate active semiconductor layer 14 at least to the desired ion track length $T_{Ion}$ through an interconnect stack 16 and barrier layer 22 (if present) having a thickness $T_{Int}$ is determined based on Equation 1.

$$F_{T_x} = \frac{1}{\pi/2} \cos^{-1}\left(\frac{T_{Int} + T_x}{R - T_{Ion}}\right) \qquad [1]$$

In order to estimate the overall fraction of captured secondary charged particles 36 for all possible neutron reactions within neutron conversion layer 20, wherein neutron conversion layer 20 has a total thickness of $T_{NCL}$, Equation 1 is integrated throughout the entire thickness of neutron conversion layer 20, as shown in Equation 2.

$$F = \frac{2}{\pi\, T_{NCL}} \int_0^{T_{NCL}} \cos^{-1}\left(\frac{T_{Int} + T_x}{R - T_{Ion}}\right) dT_x \qquad [2]$$

The fraction F determined by Equations 1 and 2 only indicate the fraction of secondary charged particles 36 that are capable of reaching active semiconductor layer 14 with sufficient energy to penetrate to the desired minimum track length $T_{Ion}$. Other factors, described in more detail below, can affect whether the secondary charged particles 36 are actually captured by active semiconductor layer 14 with the desired minimum ion track length $T_{Ion}$.

As shown in FIG. 1, interconnect stack 16 comprises interconnect layers 18 that include conductive contacts and vias that electrically connect electrical elements of charge-sensitive array 42 of active semiconductor layer 14 to each other and to another circuit external to neutron detector 10, such as a printed circuit board (not shown) connected to neutron detector 10. Interconnect layers 18 are not illustrated in detail in FIG. 1. Interconnect layers 18, sometimes referred to as metal layers, can include electrically conductive paths, formed, e.g., by wiring or electrically conductive vias and represented schematically by "M1" for a first interconnect layer and "M2" for a second interconnect layer in FIG. 1, surrounded by a dielectric material 48, such as silicon dioxide or a low-κ dielectric. The electrically conductive paths M1, M2 each provides unrestricted routing layers between charge-sensitive array 42 and circuitry external to neutron detector 10. Electrically conductive paths M1, M2 of one interconnect layer 18 may be connected to active semiconductor layer 14 by an electrically conductive via 24 that comprises an electrically conducting material extending through dielectric material 48. Examples of materials used to form vias 24 include tungsten and copper.

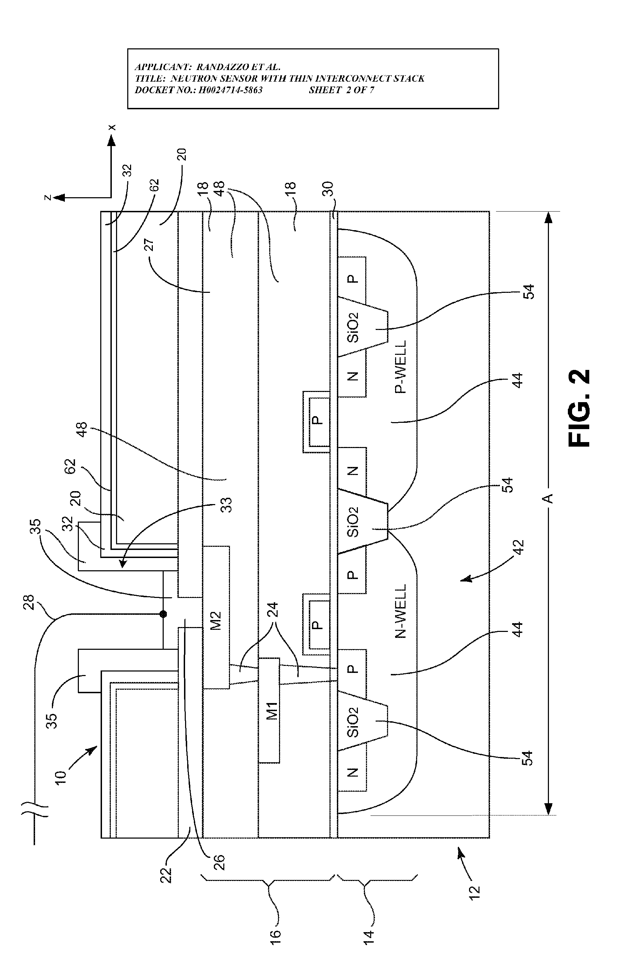

Electrically conductive bondsite locations 26 electrically connect interconnect layers 18 to outside circuitry, such as a printed circuit board. Electrically conductive bondsite locations 26, which can be, for example, conductive pads, are located at a top surface of one or more interconnect layers 18. In one example, electrical bondsite location 26 is only provided on a topmost interconnect layer 18. Electrical bondsite locations 26 provide an area that is sufficiently large to allow electrical connection between interconnect layers 18 and outside circuitry (e.g., a power supply, ground, signal sources, other chips, printed circuit boards, and the like). In one example, the material that makes up the interconnect circuitry of interconnect layers 18, shown as M1 and M2 in FIG. 1, may not be suitable for wirebonding, solder bumping, or other methods of electrical connection. Thus, in some examples, an additional electrical bondsite location comprised of a material suitable for defining an electrical connection can be deposited and patterned on interconnect layer 18 in electrical connection with electrically conductive path M2 to define a conductive pad. For example, the electrical bondsite location can be metalized on electrically conductive path M2. An example of a metalized electrical bondsite location 26 on a topmost interconnect layer 18 is shown in FIG. 2, wherein a metal contact layer 35 is deposited on an exposed portion of electrical bondsite location 26. Electrical bondsite location 26 can be formed from any suitable electrically conductive material, such as, for example aluminum, gold, or an aluminum alloy, such as AlCu.

In a conventional semiconductor device, an interconnect stack includes several interconnect layers, such as at least two interconnector layers or at least five interconnect layers, and sometimes as many as nine interconnect layers, in order to provide sufficient interconnect circuitry to deliver power to the semiconductor circuitry and support the input/output duty load. The distance range R that an alpha particle or other secondary charged particle 36 emitted from neutron conversion layer 20 penetrates through interconnect stack 16 is limited, as described above. Thus, the thickness of a conventional interconnect stack having five to nine interconnect layers can be too large to allow a sufficient number of secondary charged particles 36 to reach active semiconductor layer 14. In contrast to conventional semiconductor devices, in some examples, interconnect stack 16 of neutron detector 10 includes between two and four interconnect layers 18. In one example, interconnect stack 16 comprises only two thin interconnect layers 18.

Limiting the number of interconnect layers 18 of interconnect stack 16 and of the isolation dielectrics (not shown) between interconnect layers 18 can decrease the thickness of interconnect stack 16, which increases the fraction of secondary charged particles 36 emitted from neutron conversion layer 20 that have a sufficient ion track length in active semiconductor layer 14 to generate a detectable charge. In some examples, interconnect stack 16 is sufficiently thin such that at least about 10%, such as at least about 20%, and in one example at least about 30%, of secondary charged particles 36 emitted by neutron conversion layer 20 reach active semiconductor layer 14 with sufficient ion track length to generate a detectable charge, e.g., with a track length of at least the minimum desired track length $T_{Ion}$. As described above, the ion track length $T_{Ion}$ is the minimum ion track length that will produce a detectable charge within active semiconductor layer 14, as described above, and the primary factors that determines whether a secondary charged particle 36 will have sufficient energy to penetrate to the minimum ion track length $T_{Ion}$ are the penetration range R of a secondary charged particle 36 in the materials of active semiconductor layer 14, interconnect stack 16, and barrier layer 22 (if present) and the thickness $T_{Int}$ of interconnect stack 16 and barrier layer 22 (if present). In one example, wherein neutron conversion layer 20 comprises boron-10 as the neutron conversion material, an aggregate thickness $T_{int}$ of interconnect stack 16 (which may include barrier layer 22 and other isolation layers) of less than about 1.5 microns will provide for at least about 10% of the generated charged particles having a sufficient ion track length $T_{Ion}$ to generate a detectable charge. In one example, the aggregate thickness $T_{Int}$ is between about 0.5 microns and about 3.0 microns, for example between about 0.8 microns and about 1.5 microns, such as about 1.2 microns.

An example of an active semiconductor layer 14 usable in the neutron detector 10 of the present disclosure is shown in FIGS. 1-4 and includes an array 42 of charge-sensitive circuits 44 that are capable of detecting a charge 38 created by a secondary charged particle 36 in active semiconductor layer 14. In one example, active semiconductor layer 14 exploits the phenomenon of single event upsets (SEUs), which results from radiation-induced bit errors in semiconductor memory devices caused by the presence of ionizing radiation. These SEUs can be used to detect the presence of ionizing radiation, such as the secondary charged particles produced through neutron nuclear reactions, by using the semiconductor device to determine when SEUs have occurred. The solid-state neutron detector 10 described herein may take advantage of the SEU phenomenon through the use of solid films made from neutron converter materials, such as $^{10}$B that form secondary charged particles, such as alpha particles.

Charge-sensitive circuits 44 may comprise p-channel and n-channel metal-oxide-semiconductor field-effect transistors (MOSFETs) with various embodiment including resistors, capacitors, diodes, and bipolar junction transistors (BJTs). In some examples, charge-sensitive circuits 44 may be configured similar to a conventional semiconductor memory device, such as a static random access memory (SRAM) device formed on substrate 12 with individual memory cells. In one example, charge-sensitive circuits 44 may be designed to detect and count secondary charged particles as they "hit" charge-sensitive array 42. Types of circuits that may be used to count these hits include state latching circuits, glitch generating circuits, and charge loss circuits. State latching circuits are single event upset based and store the binary state change for later readout. They are essentially a one-state memory cell lacking a second bitline and a second enable select transistor. These circuits allow for very infrequent reads as well as a spatial mapping of the upsets. Glitch generating circuits, or edge producing cells, create a "glitch," i.e. a rising or falling edge for each upset detected. Charge-loss circuits create charge leakage on a node in response to a secondary charged particle intrusion. The observable circuit change can be cell current, threshold voltage, change in voltage on the bit-line during a read, a floating body effect. A charge-loss circuit may be constructed as an array of partially-depleted floating-body SOI transistors with drains coupled to bit lines and sources coupled to a low voltage.

In other examples, charge-sensitive circuits 44 may also comprise other charge-sensitive devices such as dynamic random access memory (DRAM), other types of random access memories, non-random access memories, charge coupled devices, charge injection devices, or other memory devices structures and substrates. Examples of charge-sensitive circuits 44 and arrays 42 that may be used with neutron detector 10 of the present disclosure are disclosed in commonly-assigned U.S. Patent Application Serial No. 12/536,950, which is entitled, "Neutron Detector Cell Efficiency," and was filed on August 6, 2009, the disclosure of which is incorporated herein by reference in its entirety.

Substrate 12 provides the mechanical support of active semiconductor layer 14, interconnect stack 16, and neutron conversion layer 20. In one example, shown in FIG. 1, substrate 12 is made from a bulk semiconductor material, such as bulk silicon. The term "bulk" semiconductor refers to semiconductor devices wherein the active semiconductor layer 14 is fabricated within the bulk substrate 12, as shown in FIG. 1, as opposed to being fabricated out of a thin semiconductor layer deposited on another substrate, such as a dielectric insulating layer (generally referred to as "Silicon On Insulator" or "SOI"). However, in some examples, an SOI type semiconductor layer can be used.

In some examples, in which substrate 12 comprises a bulk semiconductor material, active semiconductor layer 14 is fabricated by doping, e.g., by diffusing impurities into, select portions of bulk semiconductor substrate 12 in order to form areas with higher levels of free electrons, indicated by an N for "negative" in FIG. 1, or higher levels of holes, indicated by a P for "positive" in FIG. 1, that make up circuit elements 44 of charge-sensitive array 42. This method forms active semiconductor layer 14 as a top portion of bulk semiconductor substrate 12. As described in more detail below, in examples in which substrate 12 is a bulk semiconductor, a secondary charged particle 36 can have a longer ion track length and charge-sensitive array 42 generally will provide a larger sensitive cross-sectional area A of active semiconductor layer 14 compared to an SOI semiconductor layer. Typically, a bulk semiconductor substrate 12 comprises silicon, but bulk substrate 12 may comprise other semiconductor materials, such as silicon carbide (SiC), germanium (Ge), silicon germanium (SiGe), gallium arsenide (GaAs), diamond, or any other appropriate semiconductor.

Certain advantages may be result from fabricating substrate 12 from a bulk semiconductor substrate, as opposed to an SOI semiconductor layer. As described above, when secondary charged particles 36 encounters active semiconductor layer 14, secondary charged particles 36 generate a charge cloud 38 in active semiconductor layer 14, where the charge cloud 38 is detected by charge-sensitive array 42. However, charge-sensitive array 42 will only detect a charge cloud 38 that is generated in active semiconductor material within the charge-sensitive array 42. An "active semiconductor" can be a semiconductor material that is part of charge-sensitive array 42, or semiconductor material that is sufficiently close to charge-sensitive array 42 that any charge generated in the semiconductor material can be drawn back into charge-sensitive array 42 by electrical conduction.

A bulk semiconductor substrate 12 provides a much thicker layer (where the thickness is measured in the z-axis direction, whereby orthogonal x-z axes are shown in FIGS. 1-3 for ease of description) of active semiconductor compared to an SOI semiconductor layer and, thus, has a larger potential amount of active, detectable charge within active semiconductor layer 14. An example of this benefit is shown in FIG. 3, wherein a secondary charged particle 36A has the entire thickness (as measured in the z-axis direction) of active semiconductor layer 12 to form an ion track 40A that produces detectable charge. As shown in FIG. 3, secondary charged particle 36A can pass through an exposed portion of active semiconductor 14 and into an N-well 52. The entirety of ion track 40A within N-well 52 generates useful detectable charge. The active semiconductor material of active semiconductor layer 14 is typically much thicker in a bulk substrate 12 device than on a SOI device. In one example, active semiconductor layer 14 situated (e.g., fabricated) on bulk substrate 12 has a thickness of between about 0.1 micron and about 5 micron, such as about between about 0.25 micron and about 1 micron. The thicker active semiconductor layer 14 and resulting longer ion tracks also allow charge-sensitive array 42 to be less sensitive and still detect charge cloud 38 while using less power than a more sensitive array that would be needed for a thinner active semiconductor layer.

Another advantage provided by a bulk semiconductor substrate 12 is a large sensitive cross-sectional area of active semiconductor that can be encountered by a secondary charged particle 36 and produce a detectable charge. As shown in FIG. 3, any secondary charged particle 36 that is directed toward active semiconductor layer 14 fabricated on bulk semiconductor substrate 12 along the entire cross section A of charge-sensitive array 42 will, if it has sufficient energy, reach a portion of active semiconductor within charge-sensitive array 42 and produce a detectable charge 38. For example, if a first secondary charged particle 36A hits active semiconductor 14 directly at one of the circuits 44 in charge-sensitive array 42, such as at a portion of a N-well 52 as shown in FIG. 3, secondary charged particle 36A produces an ion track 40A that is longer than the desired minimum ion track $T_{Ion}$ and produces a detectable charge cloud 38.

Even if a second secondary charged particle 36B initially comes into contact with an isolation trench region 54 filled with a dielectric material that is not active semiconductor material capable of detecting a charge, secondary charged particle 36B can still penetrate through trench region 54 and along an ion track 40B into active semiconductor material of active semiconductor layer 12, such as the semiconductor in active P-well 58 shown in FIG. 3. In contrast, a typical SOI device generally includes semiconductor material isolated between dielectric trenches on the sides and a dielectric insulation layer below so that only secondary charged particles that directly hit the semiconductor material will be able to generate a detectable charge.

Bulk semiconductor substrate 12 can capture charge that is not initially generated within the active semiconductor material of charge-sensitive array 42. For example, even if the first secondary charged particle 36A shown in FIG. 3 penetrates beyond the active semiconductor material of N-well 52 into bulk semiconductor substrate 12, some of the charge generated in substrate 12 near the active semiconductor material, such as the charge generated in ion track portion 56, can be drawn back into active semiconductor layer 14 because bulk semiconductor substrate 12 is made from a semiconductor material through which charge can flow. Similarly, a third secondary charged particle 36C may miss charge-sensitive array 42 and only come into contact with bulk semiconductor substrate 12 near an outer circuit of charge-sensitive array 42, such as P-well 58. However, because bulk semiconductor substrate 12 is a semiconductor, some of the charge in ion track 40C may flow into charge-sensitive array 42 and be detected by the outer circuit 58.

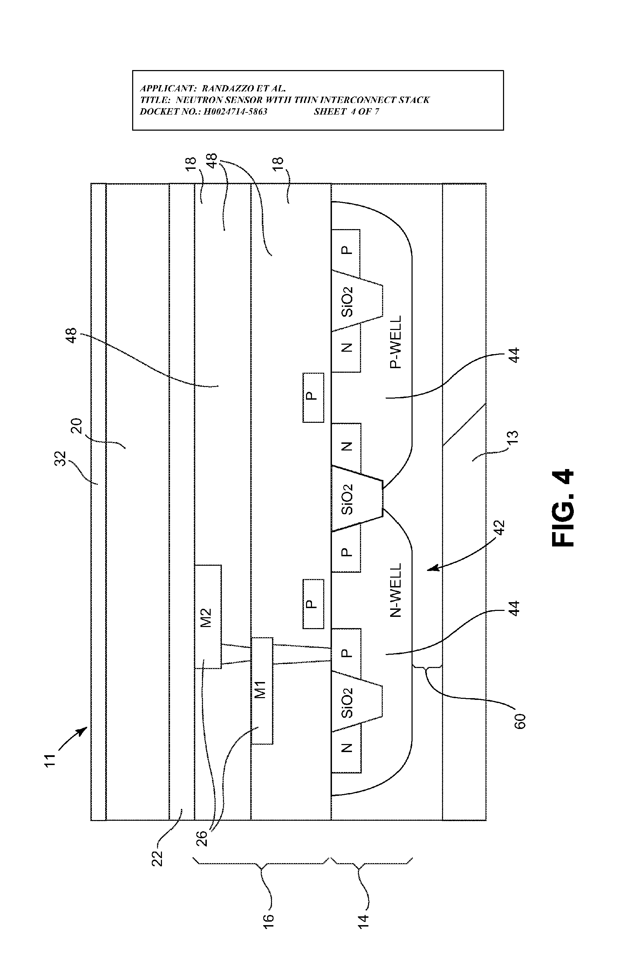

FIG. 4 is a schematic cross-sectional view of another example neutron detector 11, which is similar to neutron detector 10, but includes insulator substrate 13, rather than the bulk semiconductor substrate 12 shown in FIG. 1. In this example, insulator substrate 13 is made from an electrically insulating material, such as a dielectric material like silicon dioxide, for example the insulating or "buried oxide" layer in an SOI device. Active semiconductor layer 14, which as described above comprises a semiconductor material such as silicon, is deposited as a separate layer on top of insulator substrate 13. A conventional SOI semiconductor device has an active semiconductor layer with a thickness just large enough for the fabrication of the active semiconductor components. In one example, shown in FIG. 4, the semiconductor material deposited on insulator substrate 13 is thicker than is necessary for the fabrication of active semiconductor layer 14 so that the example of neutron detector 11 shown in FIG. 4 has a thicker layer of active semiconductor material, similar to bulk substrate 12. In other words, in the example shown in FIG. 4, active semiconductor layer 14 includes a bulk portion 60 that acts as a truncated bulk semiconductor layer that is deposited on SOI substrate 13, allowing active semiconductor layer 14 to have the same advantages of thicker active semiconductor, a larger sensitive cross-sectional area, and the ability to draw some charge back into charge-sensitive array 42 described above for a bulk semiconductor substrate 12, while being able to exploit the advantages that an SOI substrate 13 provides.

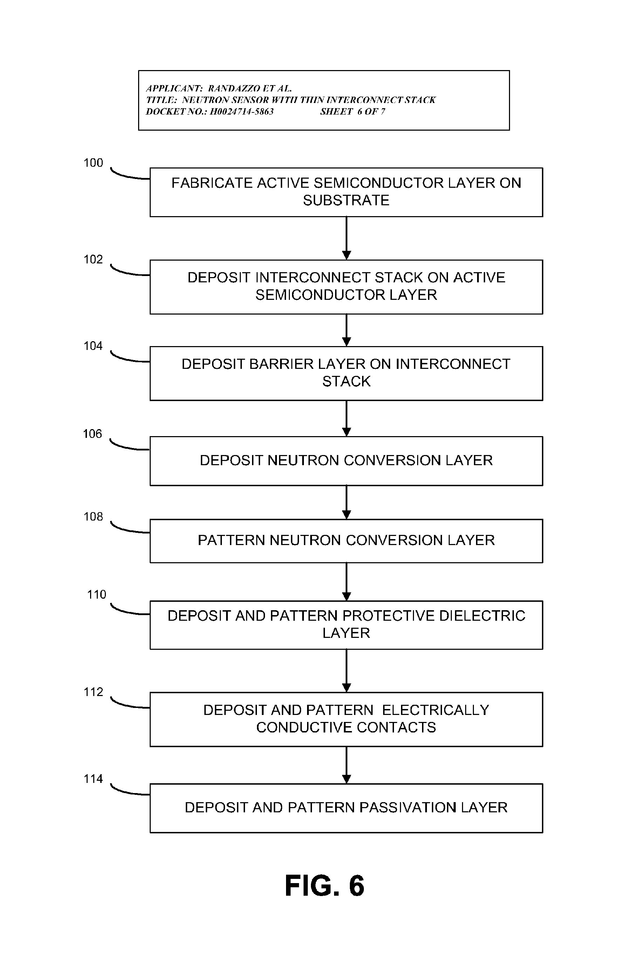

An example method of making a neutron detector 10, 11 as shown in FIGS. 1-4 is described below with respect to FIG. 6. The method comprises fabricating an active semiconductor layer 14 on a substrate 12, 13 (100), depositing a stack 16 of interconnect layers 18 on active semiconductor layer 14 (102) , and depositing a neutron conversion layer 20 (106) on stack 16 of interconnect layers 18, wherein stack 16 of interconnect layers 18 is sufficiently thin such that at least about 10% of secondary charged particles 36 generated in neutron conversion layer 20 will have a sufficient ion track length, for example at least a minimum desired track length $T_{Ion}$, in active semiconductor layer 14 to generate a detectable charge. The method may also include patterning neutron conversion layer 20 (108) for the purpose of forming contacts and vias 24 and bondsite locations 26. In one example, only two interconnect layers 18 are deposited on active semiconductor layer 14. In the example method shown in FIG. 6, the method further comprises depositing a barrier layer 22 (104) between stack 16 of interconnect layers 18 and neutron conversion layer 20. In one example, the method may further comprise depositing a protective dielectric layer 62 (110) and/or depositing a passivation layer 32 (114) on neutron conversion layer 20. In one method, substrate 12 is a bulk semiconductor material and fabricating active semiconductor layer 14 (100) comprises modifying a top portion of the bulk semiconductor substrate 12 by doping select sections of the top portion of the bulk semiconductor material.

In some examples, fabricating active semiconductor layer 14 (100) comprises fabricating charge sensitive array 42, such as through Bulk (junction isolated) complimentary metal-oxide-semiconductor (CMOS) or bipolar junction CMOS (BICMOS), SOI (oxide insulated) CMOS or BICMOS including floating-body SOI, body-tie SOI, an SOI employing a mix, and partially depleted or fully depleted SOI, thick or thin SOI, junction isolated implemented on thick SOI, or CMOS based non-volatile technologies. If the substrate on which device 10, 11 is formed is a bulk semiconductor substrate 12 as described above with respect to FIGS. 1-4, then fabricating charge sensitive array 42 may comprise depositing bulk substrate 12 (e.g., by physical vapor deposition, chemical vapor deposition, electrochemical deposition, molecular beam epitaxy, and atomic layer deposition), shaping bulk substrate 12 (e.g., by etching, lithography, or planarization), and modifying a top portion of bulk substrate 12 to form circuits 44 in active semiconductor layer 42. Modification of the top portion of bulk substrate 12 may include doping portions of the top portion to form circuits 44 of charge-sensitive array 42. In one example, portions of active semiconductor layer 14 may also be removed to form isolation trenches 54 by depositing a dielectric material, such as silicon dioxide as shown in FIG. 1, in isolation trenches 54.

If the substrate is an insulator substrate 13, such as in the example neutron detector 11 described with respect to FIG. 4, fabricating charge-sensitive array 42 (100) may include depositing a layer of semiconductor material onto insulator substrate 13 (e.g.,,, silicon, silicon carbide, germanium, silicon germanium, gallium arsenide, or diamond) by any suitable deposition method (e.g., physical vapor deposition, chemical vapor deposition, electrochemical deposition, molecular beam epitaxy, and atomic layer deposition), shaping the semiconductor layer (e.g., by etching, lithography, or planarization), and modifying the semiconductor layer to form active semiconductor layer 14, such as through doping portions of the semiconductor layer to form circuits 44 of charge-sensitive array 42. In one example, the semiconductor layer is deposited to have a thickness that is thicker than would be necessary for charge-sensitive array 42 so that a bulk semiconductor portion 60 is provided below active semiconductor layer 14 to allow for a greater amount of active semiconductor material, a larger sensitive cross-sectional area, and the ability to draw charge back into charge-sensitive array 42, as described above.

In some examples, depositing interconnect stack 16 (102) comprises fabricating a plurality of interconnect layers 18, also referred to as metal layers, onto active semiconductor layer 14. A thin electrical isolation layer 30, such as a dielectric layer, may be deposited between active semiconductor layer 14 and the first interconnect layer 18. As described above, the total thickness of interconnect stack 16 and barrier layer 22 (if present) should be as thin as possible while still providing adequate electronic pathways for the operation of charge sensitive array 42. Thus, in some examples, the method of depositing interconnect stack 16 may include depositing as few interconnect layers 18 as are necessary for adequate power supply and signal transmission to and from active semiconductor layer 14. In one example method, between two and four interconnect layers 18 are deposited on active semiconductor layer 14, and in another example method, only two interconnect layers 18 are deposited. Moreover, the aggregate thickness of the interconnect layers and the intermediate isolation dielectrics should be thin enough to ensure that a significant fraction of the secondary charged particles will reach the active silicon layer with enough remaining energy to generate a detectable charge track. Each interconnect layer 18 should be as thin as possible, so the technology employed to deposit each interconnect layer 18 at the fabrication foundry may be a more advanced method, such as planar copper dual damascene interconnect technology, tungsten polished local interconnedt technology, or planarized subtractive aluminum interconnect technology, or some combination of these. In one example, each interconnect layer 18 has a thickness of less than about 0.8 microns, such as less than about 0.5 microns. In one method, interconnect stack 16 is sufficiently thin such that at least about 10%, such as at least about 20%, for example at least about 30%, of secondary charged particles 36 generated in neutron conversion layer 20 will have a sufficient ion track length in active semiconductor layer 14 to produced a detectable charge. For the example in which neutron conversion layer 20 comprises boron-10, interconnect stack 16 has a thickness of less than about 1.5 microns, such as between about 0.8 microns and about 1.5 microns or about 1.2 microns.

Depositing neutron conversion layer 20 (106) may include first depositing an adhesion layer (not shown) on interconnect stack 16 or barrier layer 22 (if present) to adhere neutron conversion layer 20 to interconnect stack 16 or barrier layer 22. Neutron conversion layer 20 may be deposited by any method capable of depositing the neutron conversion material selected for neutron conversion layer 20. For example, if a boron-10 neutron conversion material is selected, neutron conversion layer 20 may be deposited by magnetron sputtering or by chemical vapor deposition. After depositing neutron conversion layer 20, patterning of neutron conversion layer 20 (108) may be performed for the purpose of forming vias 24 and bondsite locations 26. Patterning (108) may be through shadow masking the deposition of neutron conversion layer 20 or by etching (e.g., reactive ion etching) and may involve typical chemistries that are used for bondsite location 26 and via 24 formation in conventional semiconductor fabrication, such as reactive ion etching of neutron conversion layer 20. Patterning (108) may also comprise metalizing an electrical bondsite location 26, as shown in FIG. 2, in order to ensure electrical bondsite location 26 is compatible with wire bonding or solder bumping. Patterning to form metalized electrical bondsite location 26 may be performed either before depositing and patterning neutron conversion layer 20 or after. For example, patterning bonding location 26 may include patterning an opening in barrier layer 22, depositing a suitable "remetalization" layer 35, such as with aluminum or an aluminum alloy such as AlCu, at the bondsite locations, and then shadow masking the deposition of neutron conversion layer 20 to ensure that remetalized remetalized layer 35 at bondsite location 26 remain accessible. In another example, patterning of metalized bondsite location 26 may be achieved by first depositing and patterning neutron conversion layer 20 on barrier layer 22, depositing a second passivation layer 32 and patterning an opening 33 in neutron conversion layer 20 at the bondsite location 26, depositing and patterning a suitable "remetalization" layer 35, such as with aluminum or an aluminum alloy such as AlCu, at bondsite location 26, and repassivating neutron conversion layer 20 so that it is covered by passivation layer 32. (FIG. 2).

The method may also comprise depositing and patterning a protective layer 62 on top of neutron conversion layer 20 (110), which may be made from a dielectric material, in order to isolate top metal electrical bondsite locations 26 and wirebond wires 28 from neutron conversion 20 layer, which may be electrically conductive, and to provide a surface for re-metalization of electrical bondsite locations 26, if necessary, prior to wirebonding or solder bumping. After protective layer 62 is deposited, portions of the protective layer 62 are opened up as shown in FIG. 1 to allow for electrical connection between bondsite locations 26 and another circuit external to neutron detector 10, such as a printed circuit board (not shown). Protective layer 62 may be opened up using any suitable technique, such as etching. In some examples, the electrically conductive surface for connecting bondsite locations 26 with an external circuit can be aided by remetalizing a portion of a interconnect layer 18 to form a re-metalized electrical bondsite location 26, such as by patterning a passivation opening 33, re-passivating the opening, and depositing a metal contact layer 35 on an exposed portion of electrical bondsite location 26, as shown in FIG. 2, after protective layer 62 is opened up to expose at least a portion of interconnect layer 18.

The method may also comprise depositing bondsite locations 26, patterning bondsite locations 26, and connecting bondsite locations 26 to an external circuit. In one example, bondsite locations 26 are made from electrically conductive metal, such as copper, aluminum, or an AlCu alloy. Patterning of bondsite locations 26 may be through etching. In one method, connecting bondsite locations 26 to the external circuit is through a wire bonding process wherein wires 28 are bonded to bondsite location 26, such as through ball bonding, wedge bonding, or welding. The method may also include depositing and patterning a passivation layer 32 (112), such as a silicon nitride layer, before connecting bondsite locations 26 to the external circuit. After deposition, portions of passivation layer 32, neutron conversion layer 20, and barrier layer 22 may be opened up to expose bondsite locations 26 and allow for connecting bondsite locations 26 to the external circuit, such as through wire bonding.

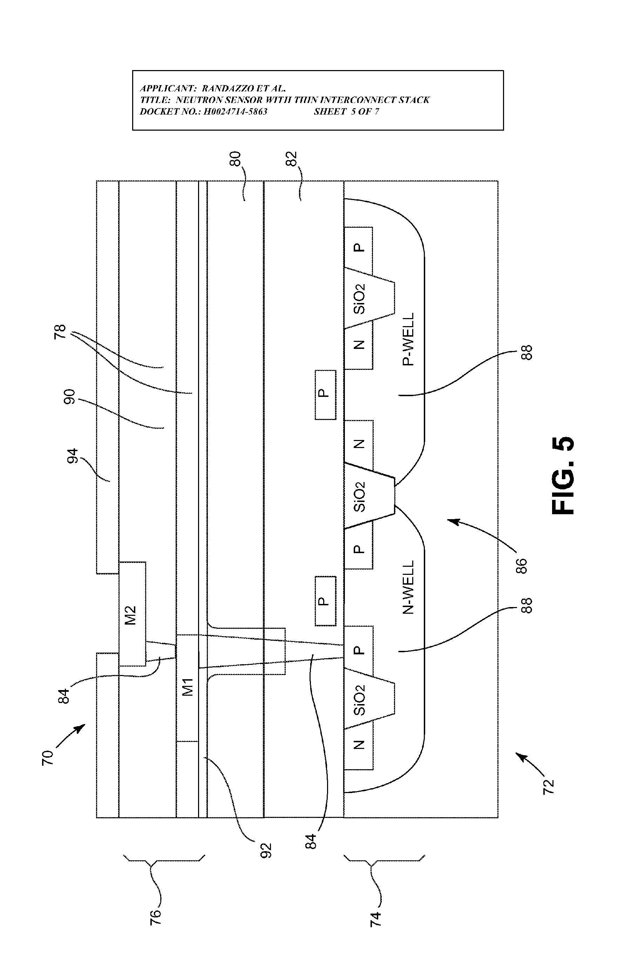

Another example of a neutron detector 70 is shown in FIG. 5. In the example shown in FIG. 5, neutron detector 70 comprises a substrate 72, an active semiconductor layer 74 fabricated on substrate 72, a neutron conversion layer 80 deposited on active semiconductor layer 74, and a stack 76 of interconnect layers 78, also referred to as an interconnect stack 76, deposited on neutron conversion layer 80. In one example, a thin contact dielectric layer 82 is included between neutron conversion layer 80 and active semiconductor layer 74 to help prevent electrical contact between neutron conversion layer 80 and active semiconductor layer 74. Contact dielectric layer 82 may have a thickness of between about 0.3 microns and about 0.7 microns, such as about 0.5 microns.

Neutron detector 70 may also include one or more electrically conductive vias 84 that extend through neutron conversion layer 80 and contact dielectric layer 82 (if present) and, in some examples, into one or more interconnect layers 78 of interconnect stack 76, as shown in FIG. 5. Vias 84 may be any material capable of providing the desired electrical connection between active semiconductor layer 74 and interconnect stack 76, such as tungsten or copper. In some examples, neutron detector 70 includes a barrier layer (not shown in FIG. 5) between neutron conversion layer 80 and active semiconductor layer 74 to help prevent diffusion of neutron conversion material from neutron conversion layer 80 into active semiconductor layer 74 and a passivation layer 94 deposited on interconnect stack 76.

Because neutron conversion layer 80 of the example shown in FIG. 5 is deposited directly on active semiconductor layer 74 or on a thin contact dielectric layer 82 on top of active semiconductor layer 74, benefits that can be achieved from minimizing a thickness of interconnect stack 76 to minimize the distance between the neutron conversion layer and the active semiconductor layer are reduced compared to interconnect stack 16 in neutron detector 10 described above with respect to FIG. 1 above. Therefore, neutron detector 70 shown in FIG. 5 allows interconnect stack 76 to be manufactured by standard back end-of-line (BEOL) technologies that result in thicker interconnect layers 78. BEOL generally describes the methods of producing interconnect layers to interconnect the electrical components in a semiconductor layer, such as charge-sensitive array 42 in active semiconductor layer 14. The use of BEOL technologies that are older than those necessary to produce the thin interconnect layers 18 of the example neutron detectors 10, 11 of FIGS. 1-4 produces interconnect layers 78 that are slightly thicker, but which still provide the electrical pathways necessary for operation of active semiconductor layer 74. This use of older BEOL technologies may be more cost effective because of the age of the technology as well as its prevalence. In addition, the example shown in FIG. 5 allows interconnect stack 76 to have as many interconnect layers 78 and as great of a thickness as desired, without having to limit the device to two or three interconnect layers 78 to ensure that neutron conversion layer 80 is sufficiently close to active semiconductor layer 74, as was the case with neutron detector 10 described above with respect to FIG. 1.

Substrate 72 and active semiconductor layer 74 in neutron detector 70 may be essentially the same as substrates 12, 13 and active semiconductor layer 14 described above with respect to neutron detectors 10, 11. Substrate 72 may be a bulk semiconductor substrate like bulk substrate 12 or an insulator substrate like insulator substrate 13. In the example shown in FIG. 5, active semiconductor layer 74 includes a charge-sensitive array 86 of circuits 88 that detect the presence of a charge cloud 38 created by a secondary charged particle 36 emitted from neutron conversion layer 80. Other than any fine tuning that may be necessary because neutron conversion layer 80 is closer to active semiconductor layer 74, the active semiconductor layer 74 of neutron detector 70 can be substantially the same as active semiconductor layer 14 of neutron detector 10 described above. Similarly, other than the thickness and deposition methods, interconnect stack 76 of neutron detector 80 and interconnect stack 14 of neutron detector 10 can be substantially the same. Interconnect stack 76 includes a plurality of interconnect layers 78 each comprising interconnect electrically conductive paths M1, M2 and electric insulating material 90 such as a dielectric, for example silicon dioxide.

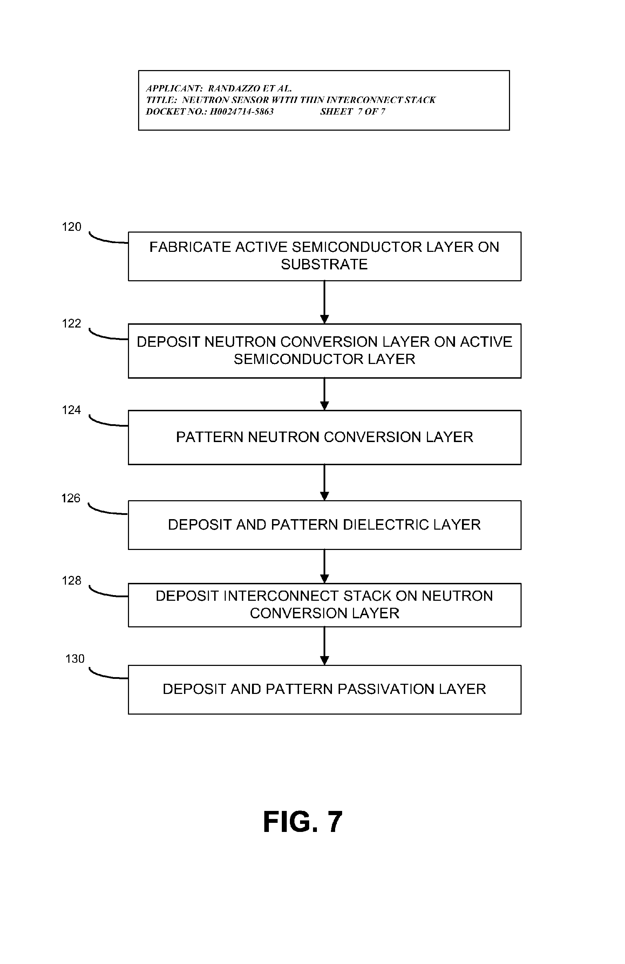

A method of making the neutron detector 70 is shown and described below with reference to FIG. 7. FIG. 7 is a flow diagram of an example technique for fabricating the example neutron detector 70 shown in FIG. 5. In the technique shown in FIG. 7, active semiconductor layer 74 is fabricated on substrate 72 (120), neutron conversion layer 80 is deposited on active semiconductor layer 74 (122) (e.g., by chemical vapor deposition of the neutron conversion material), neutron conversion layer 74 is patterned (124), such as by removing an opening in neutron conversion layer 80 for via 84 (e.g., through etching, filling the opening with via material, such as tungsten), so that the formed via 84 creates an electrical pathway from active semiconductor layer 74 through neutron conversion layer 80. The technique shown in FIG. 7 further includes depositing interconnect stack 76 on neutron conversion layer 80 (128) (e.g., such as through standard commercial BEOL methods). The method may further comprise packaging neutron detector 70, such as through standard commercial BEOL and packaging methods.

In the technique shown in FIG. 7, active semiconductor layer 74 is fabricated on substrate 72 (120) using a technique similar to or the same as the method described above for fabricating active semiconductor layer 14 on substrate 12 or 13 of the example technique described above with respect to FIG. 6. For example, a semiconductor material, either as a bulk semiconductor substrate or as a semiconductor layer on an insulator substrate, can be deposited and modified, e.g., through doping, to form charge-sensitive array 86.

In the technique shown in FIG. 7, neutron conversion layer 80 can be deposited (122) using substantially the same process as the one used to deposit neutron conversion layer 20 described above with respect to the technique shown in FIG. 6. For example, deposition of neutron conversion layer 80 may comprise depositing an adhesion layer (not shown in FIG. 5) onto active semiconductor layer 74 or contact dielectric layer 82 (if present) prior to depositing neutron conversion layer 80 so that neutron conversion layer 80 adheres to active semiconductor layer 74 or contact dielectric layer 82. Neutron conversion layer 80 may be deposited by any method capable of depositing the neutron conversion material selected for neutron conversion layer 80. For example, if a boron-10 neutron conversion material is selected, neutron conversion layer 80 may be deposited by magnetron sputtering or by chemical vapor deposition. After depositing neutron conversion layer 80, neutron conversion layer 80 can be patterned (124), e.g., to define electrically conductive vias 84 through neutron conversion layer 80.

After deposition of neutron conversion layer 80, the method of forming neutron detector 70 may include depositing a dielectric layer 92 (126) to electrically isolate neutron conversion layer 80 from interconnect stack 76 and via 84. Next, dielectric layer 92 may be patterned, planarized, and etched to allow for the formation of an electrically conductive via 84 through neutron conversion layer 80. Via 84 is formed by filling the openings in neutron conversion layer 80 and dielectric layer 92 with an electrically conductive material, such as tungsten.

After neutron conversion layer 80 is deposited and one or more vias 84 are formed in neutron conversion layer 80, interconnect stack 76 is deposited on neutron conversion layer 80. As described above, because the thickness of interconnect stack 76 is not a factor in the fraction of secondary charged particles 36 that reach active semiconductor layer 74 of the example neutron detector 70 shown in FIG. 5, interconnect stack 76 can have as many interconnect layers 78 as desired and can be thicker than interconnect stack 16 of neutron detector 10 described with respect to FIGS. 1-4. Therefore, interconnect layers 78 that form interconnect stack 76 can be deposited by any standard commercial BEOL process. In some examples, the BEOL process used to deposit interconnect layers 78 is a copper or aluminum based process, but the process can be selected based on the lithography requirements needed to balance cost and sensitivity of neutron detector 70. The technique shown in FIG. 7 for fabricating the example neutron detector 70 shown in FIG. 5 may further include depositing and patterning a passivation layer 94 on interconnect stack 76 (130).

Various embodiments have been described. These and other embodiments are within the scope of the following claims.

**Claims**

1. A method comprising:

   fabricating an active semiconductor layer (14) on a substrate (12);
   depositing a stack (16) of interconnect layers (18) on the active semiconductor layer; and
   depositing a neutron conversion layer (20) on the stack of interconnect layers,
   wherein the stack of interconnect layers is configured such that at least about 10% of secondary charged particles (36) generated in the neutron conversion layer have a sufficient ion track length ($T_{Ion}$) in the active semiconductor layer to generate a detectable charge in the active semiconductor layer.

2. The method of claim 1, wherein the stack of interconnect layers has a thickness of less than about 1.5 microns.

3. The method of any of claims 1 or 2, further comprising patterning the neutron conversion layer to allow for electrical connection to an interconnecting wire (28) of one of interconnect layers of the stack of interconnect layers.

4. The method of any of claims 1-3, wherein depositing the substrate comprises depositing a bulk semiconductor material.

5. The method of any of claims 1-3, wherein depositing the substrate comprises depositing a semiconductor material on an insulating layer (13).

6. A semiconductor device comprising:

   a substrate (12);
   an active semiconductor layer (14) situated on the substrate;
   a stack (16) of interconnect layers (18) deposited on the active semiconductor layer; and
   a neutron conversion layer (20) deposited on the stack of interconnect layers;
   wherein the stack of interconnect layers is configured such that at least about 10% of secondary charged particles (36) generated in the neutron conversion layer have a sufficient ion track length ($T_{Ion}$) in the active semiconductor layer to generate a detectable charge.

7. A semiconductor device comprising:

a substrate (72);
an active semiconductor layer (74) situated on the substrate;
a neutron conversion layer (80) deposited on the active semiconductor layer; and
a stack (76) of interconnect layers (78) deposited on the neutron conversion layer.

8. The semiconductor device of claim 6 or 7, wherein the stack of interconnect layers has a thickness of less than about 1.5 microns.

9. The semiconductor device of claim 6 or 7, wherein the substrate comprises an electrical insulating layer (13).

10. The semiconductor device of claim 6 or 7, wherein the substrate comprises a bulk semiconductor material.

APPLICANT: RANDAZZO ET AL.
TITLE: NEUTRON SENSOR WITH THIN INTERCONNECT STACK
DOCKET NO.: H0024714-5863          SHEET 1 OF 7

FIG. 1

APPLICANT: *RANDAZZO ET AL.*
TITLE: *NEUTRON SENSOR WITH THIN INTERCONNECT STACK*
DOCKET NO.: *H0024714-5863*   SHEET 2 OF 7

**FIG. 2**

M2

M1

SiO2   N   P   P   N   SiO2   P   N   SiO2   P

N-WELL   P-WELL

A

**FIG. 3**

APPLICANT: RANDAZZO ET AL.
TITLE: NEUTRON SENSOR WITH THIN INTERCONNECT STACK
DOCKET NO.: H0024714-5863    SHEET 3 OF 7

**FIG. 4**

EP 2 354 812 A2

APPLICANT: RANDAZZO ET AL.
TITLE: NEUTRON SENSOR WITH THIN INTERCONNECT STACK
DOCKET NO.: H0024714-5863
SHEET 4 OF 7

APPLICANT:  RANDAZZO ET AL.
TITLE:  NEUTRON SENSOR WITH THIN INTERCONNECT STACK
DOCKET NO.: H0024714-5863          SHEET  5 OF 7

FIG. 5

100 — FABRICATE ACTIVE SEMICONDUCTOR LAYER ON SUBSTRATE

102 — DEPOSIT INTERCONNECT STACK ON ACTIVE SEMICONDUCTOR LAYER

104 — DEPOSIT BARRIER LAYER ON INTERCONNECT STACK

106 — DEPOSIT NEUTRON CONVERSION LAYER

108 — PATTERN NEUTRON CONVERSION LAYER

110 — DEPOSIT AND PATTERN PROTECTIVE DIELECTRIC LAYER

112 — DEPOSIT AND PATTERN ELECTRICALLY CONDUCTIVE CONTACTS

114 — DEPOSIT AND PATTERN PASSIVATION LAYER

## FIG. 6

APPLICANT: RANDAZZO ET AL.
TITLE: NEUTRON SENSOR WITH THIN INTERCONNECT STACK
DOCKET NO.: H0024714-5863          SHEET 7 OF 7

```
120 ──┐
       │  FABRICATE ACTIVE SEMICONDUCTOR LAYER ON
       │              SUBSTRATE
                        │
                        ▼
122 ──┐
       │  DEPOSIT NEUTRON CONVERSION LAYER ON ACTIVE
       │           SEMICONDUCTOR LAYER
                        │
                        ▼
124 ──┐
       │      PATTERN NEUTRON CONVERSION LAYER
                        │
                        ▼
126 ──┐
       │      DEPOSIT AND PATTERN DIELECTRIC LAYER
                        │
                        ▼
128 ──┐
       │   DEPOSIT INTERCONNECT STACK ON NEUTRON
       │           CONVERSION LAYER
                        │
                        ▼
130 ──┐
       │     DEPOSIT AND PATTERN PASSIVATION LAYER
```

# FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 53695009 A